(19) **Europäisches Patentamt**

**European Patent Office**

**Office européen des brevets**

(11) **EP 1 102 420 A1**

## (12) EUROPEAN PATENT APPLICATION
published in accordance with Art. 158(3) EPC

(43) Date of publication:
**23.05.2001 Bulletin 2001/21**

(21) Application number: **00931605.0**

(22) Date of filing: **30.05.2000**

(51) Int. Cl.⁷: **H04B 7/10**, H04B 7/08,
H04B 7/02, H04B 7/005,
H01Q 3/26

(86) International application number:
**PCT/JP00/03446**

(87) International publication number:
**WO 00/74267 (07.12.2000 Gazette 2000/49)**

(84) Designated Contracting States:
**AT BE CH CY DE DK ES FI FR GB GR IE IT LI LU
MC NL PT SE**
Designated Extension States:
**AL LT LV MK RO SI**

(30) Priority: **31.05.1999 JP 15230199**

(71) Applicant:
**MATSUSHITA ELECTRIC INDUSTRIAL CO., LTD.
Kadoma-shi, Osaka 571-8501 (JP)**

(72) Inventors:
• **SAITO, Yoshiko**
**Yokosuka-shi, Kanagawa 239-0806 (JP)**
• **UESUGI, Mitsuru**
**Yokosuka-shi, Kanagawa 238-0048 (JP)**

(74) Representative:
**Grünecker, Kinkeldey,
Stockmair & Schwanhäusser
Anwaltssozietät
Maximilianstrasse 58
80538 München (DE)**

### (54) RECEIVER AND EQUALIZING METHOD

(57) Time adjustment amount control section 105 detects a time span amount of combined received signals to be generated when received signal components are converged based on a time adjustment amount calculated in propagation path estimating section 104, compares the time span amount with the number of delay elements of a replica generating section in Viterbi equalizer 107, and when the amount does not accord with the number, resets the time adjustment amount to instruct to a time adjustment section in plural array combining section 102 so that the amount accords with the number.

FIG.7

**EP 1 102 420 A1**

**Description**

Technical Field

The present invention relates to a reception apparatus and equalizing processing method, and more particularly, to a reception apparatus and equalizing processing method that update on demand tap coefficients of an equalizer based on an adaptive algorithm.

Background Art

A conventional reception apparatus converges received signal components spread over a time axis into a range, which is timewise short as possible, enabling compensation of an equalizer, prior to equalizing processing.

The conventional reception apparatus is explained below using FIGs.1 to 6. FIG.1 is a partial block diagram illustrating a schematic configuration of the conventional reception apparatus. FIG.2 is a partial block diagram illustrating a schematic configuration of a plural array combining section in the conventional reception apparatus. FIG.3 is a partial block diagram illustrating a schematic configuration of a propagation path estimating section in the conventional reception apparatus. FIGs.4A to 4D illustrate one example of a delay profile. FIG.5 is a partial block diagram illustrating a schematic configuration of a Viterbi equalizer in the conventional reception apparatus. FIG.6 is a partial block diagram illustrating a schematic configuration of a replica generating section in the conventional reception apparatus.

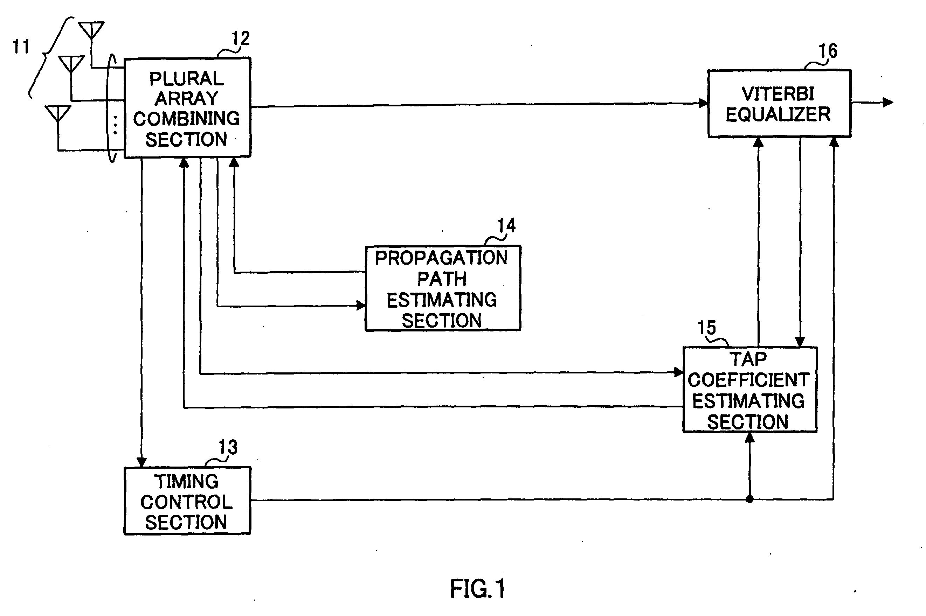

The entire configuration of the conventional reception apparatus is first explained using FIG.1. In FIG.1, plural array combining section 12 has processing systems, of which the number is the same as that of antennas, which combine signals received at respective antennas 11, and further combines resultants weighted and then combined for each antenna.

Timing control section 13 acquires symbol synchronization timings from outputs of reception processing sections provided for each antenna in plural array combining section 12. In addition, timing control section 13 is capable of acquiring a symbol synchronization timing from an output from one of the reception processing sections.

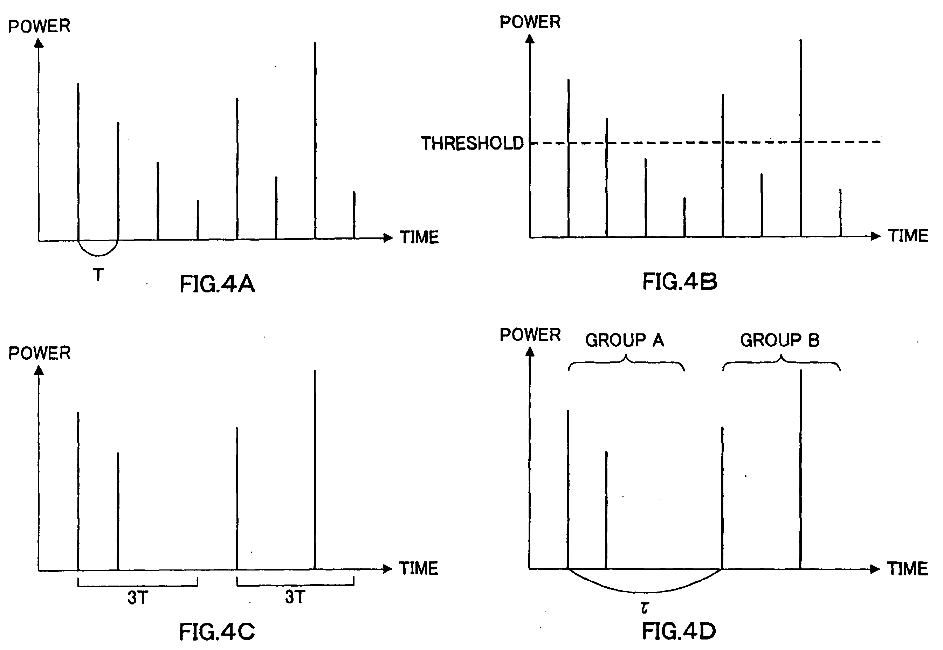

Propagation path estimating section 14 estimates a delay profile from outputs of the reception processing sections provided for each antenna in plural array combining section 12, and recognizes a spread condition of received signal components on the time axis. That is, propagation path estimating section 14 performs propagation path estimation. In order to converge the spread of received signal components in a range enabling delay compensation in Viterbi equalizer 16 described later, propagation path estimating section 14 calculates a time adjustment amount (τ shown in FIG.4D) for a delayed wave to output to time adjustment section 22 in plural array combining section 12. Propagation path estimating section 14 is capable of performing the propagation path estimation from an output from one of the reception processing sections.

Tap coefficient estimating section 15 estimates a coefficient that minimizes a mean square of a difference between a replica signal and a received signal (i.e., a weight based on the least square method), and outputs the estimated coefficient to feed forward filter (FFF) 23 in plural array combining section 12 and replica generating section 56 in Viterbi equalizer 16. The coefficients are used in FFF 23 and multipliers 65 to 69 in replica generating section 56.

Viterbi equalizer 16 generates the replica signal, and makes a decision on the received signal using the Viterbi algorithm with the difference between a received signal component subjected to array combining and the replica signal as likelihood information.

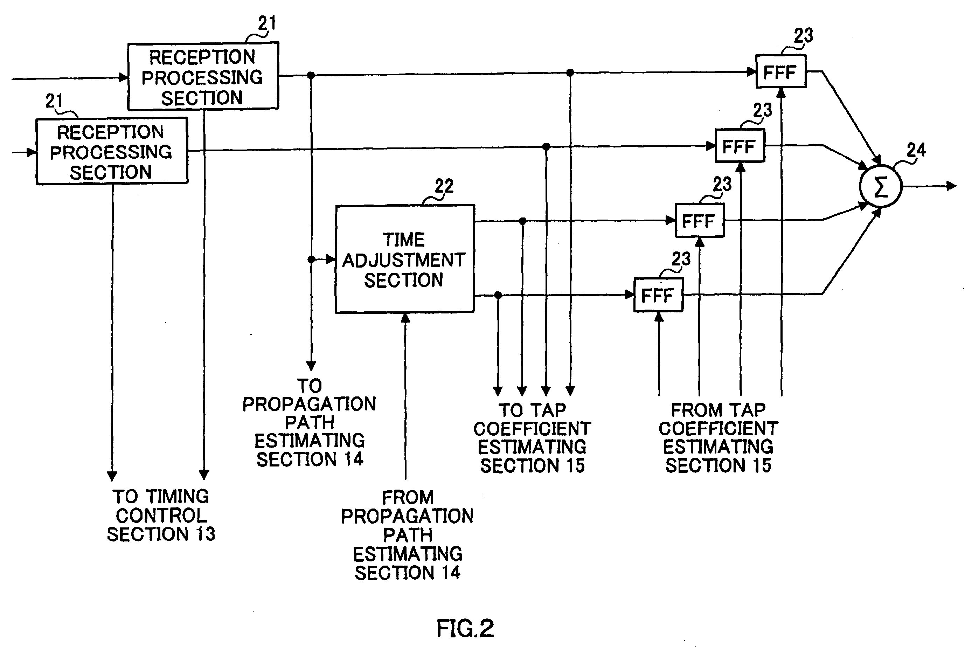

A configuration of plural array combining section 12 is next explained using FIG.2. While a case is explained herein, for example, where the number of array elements is 2, and the number of path groups is 2, any numbers of array elements and of path groups may be applicable.

In FIG.2, reception processing sections 21 perform reception processing on received signals from respective antennas. Time adjustment section 22 delays a reception-processing processed received signal based on an output from propagation path estimating section 14. FFF 23 performs weighting processing on the received signal based on the tap coefficient designated from tap coefficient estimating section 15. Combining section 24 combines all the FFF processed signals of respective paths from all antennas.

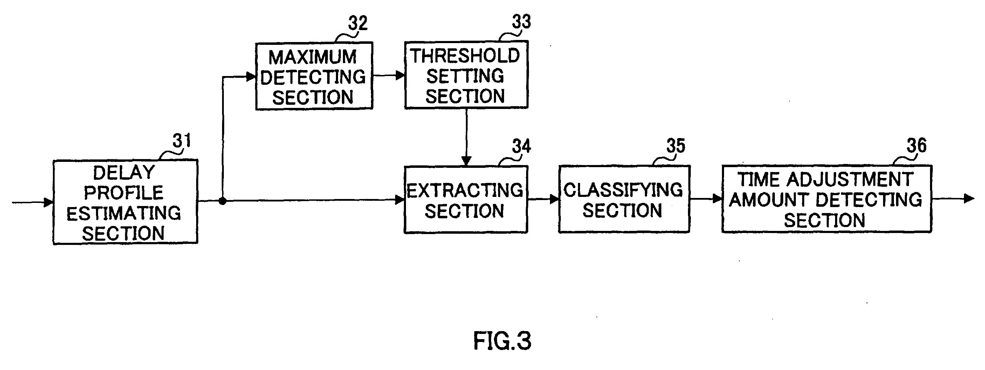

A configuration of propagation path estimating section 14 is next explained using FIG.3. In FIG.3, delay profile estimating section 31 estimates a delay profile of received signals components. An example of the delay profile is illustrated in FIG.4A.

Maximum detecting section 32 detects a maximum level among power levels of the received signal components spread on the time axis in the estimated delay profile. Based on the maximum level of the power, threshold setting section 33 sets a threshold level to select only a path with excellent received condition. Any method may be applicable to determine the threshold level, for example, there is considered a method of obtaining predetermined percentages of the maximum level, or of subtracting a predetermined value from the maximum level. The delay profile with the threshold level set is illustrated in FIG.4B.

Extracting section 34 extracts only a path with a received power level exceeding the threshold level set by threshold setting section 33. The delay profile with extracted paths is illustrated in FIG.4C.

Classifying section 35 classifies the extracted paths into groups (groups of paths). The classification is performed so that the number of states in the Viterbi algorithm becomes as small as possible in consideration of a maximum delay time enabling compensation in Viterbi equalizer 16.

For example, in FIG.4C, a delay time of a component having the greatest delay among extracted paths is 6T. Assuming herein that the maximum delay time enabling compensation in Viterbi equalizer 16 is up to 4T delay, when a received signal with the delay profile as illustrated in FIG.4C is input to Viterbi equalizer 16 without any time adjustment, reception performance deteriorates largely due to an effect of the delayed wave beyond a compensation range.

Then, when a group is determined for each 3T delay interval (every 4 components), as illustrated in FIG.4D, two groups of group A and group B are set. When time. adjustment section 22 performs time adjustment on these groups later, since the delay time of the greatest delay component is 3T, signals of the groups can be efficiently equalized in Viterbi equalizer 16 capable of compensating up to 4T delay signal.

Classifying section 35 performs the classification so as to set the number of states to be as small as possible by determining a group for each delay time interval that is as small as possible in a range allowed by a spread condition of received signal components exceeding the threshold level or as to adapt to a range enabling compensation in an equalizer. In addition, the number of groups is not limited to 2, and is determined arbitrarily.

Time adjustment amount detecting section 36 detects a time adjustment amount. That is, based on the classification result, time adjustment amount detecting section 36 detects a time amount by which each group is delayed to combine the group with the greatest delay group. For example, in this case, since the number of all the groups in FIG.4D is 2, time adjustment amount detecting section 36 detects a time adjustment amount τ of group A by which group A is combined with group B that is the greatest delay group to provide to time adjustment section 22. In other words, the time adjustment amount τ is a distance between beginning components of respective groups on the time axis. That is, the time adjustment amount τ is determined using a first wave as a reference in each group.

In addition, when there is a plurality of groups besides the greatest delay group, time adjustment amount detecting section 36 detects the time adjustment amount for each group.

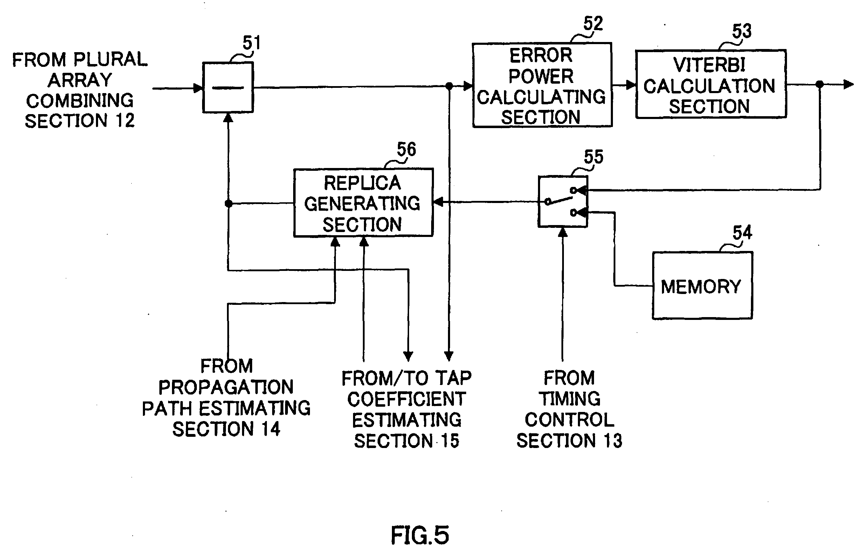

A configuration of Viterbi equalizer 16 is next explained using FIG.5. In FIG.5, subtracter 51 subtracts a replica signal from a received signal. Error power calculating section 52 calculates power corresponding to an error from the subtracted result in subtracter 51.

Viterbi calculation section 53 is, for example, comprised of an MLSE circuit that performs Maximum Likelihood Sequence Estimation, and makes a decision on a received signal using the calculated power level corresponding to the error as likelihood information.

Memory 54 stores a known signal. Switch 55 outputs the known signal stored in memory 54 to replica generating section 56 in the case of tap coefficient estimation using the known signal, while in the other case except the estimation, outputting a symbol sequence candidate output from Viterbi calculation section 53 to replica generating section 56, based on a symbol synchronization timing output from timing control section 13.

Replica generating section 56 multiplies the known signal delayed based on an output of propagation path estimating section 14 or the symbol sequence candidate of received signal by a tap coefficient estimated in tap coefficient estimating section 15, and thereby generates a replica signal.

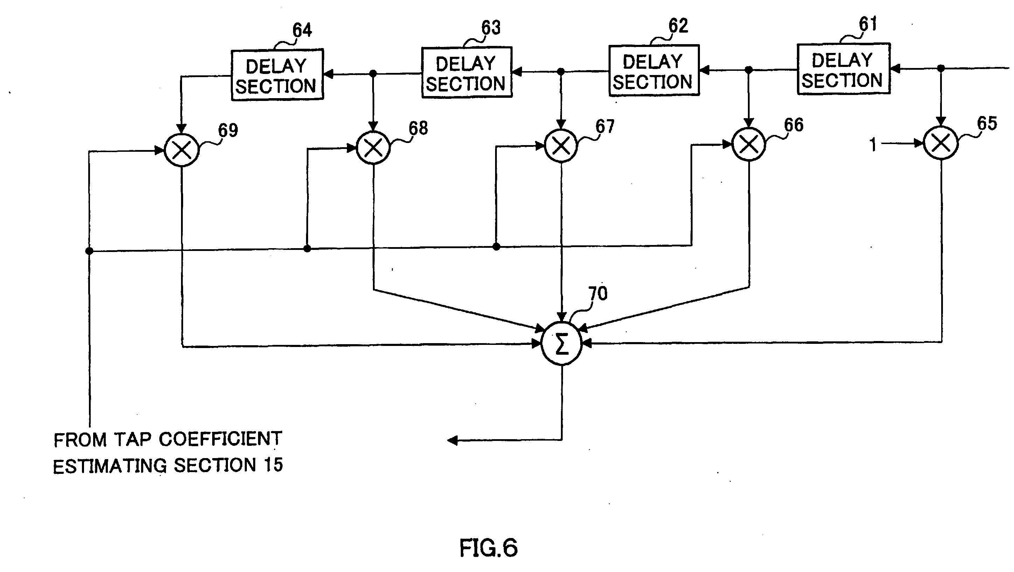

A configuration of replica generating section 56 is next explained using FIG.6. In FIG.6, each of delay sections 61 to 64 delays an input signal so that the reception apparatus fetches a received signal component at each sampling timing. While any number of delay sections may be applicable, the number is herein assumed to be 4. Further, assuming that a delay amount at each delay section is one symbol duration, the reception apparatus is capable of fetching up to 4T delayed wave maximum.

Each of multipliers 65 to 69 multiplies the known signal component or symbol sequence candidate by a respective tap coefficient estimated in tap coefficient estimating section 15. Delayed waves each weighted are added in adder 70. The replica signal is thereby generated.

At this point, since the tap coefficient is estimated so as to minimize the mean square of a difference between the received signal and the replica signal, it is considered that in a constitution where all the tap coefficients are estimated autonomously in tap coefficient estimating section 15, all the tap coefficients converge to 0, and that functions of the array and Viterbi equalizer are lost.

Therefore, a tap coefficient input to multiplier 65 provided at a tap corresponding to the first wave is generally set to a fixed value (for example, 1), and under the condition that the tap coefficient to be multiplied by the first wave is 1, respective optimal tap coefficients to be multiplied by a 1T delayed wave to 4T delayed wave are estimated in tap coefficient estimating section 15, and multiplied respectively in multipliers 66 to 69.

In addition, in a replica generating section of the conventional reception apparatus, while FIG.6 illustrates the case where the tap coefficient to be multiplied by a first wave is a fixed value of 1, the fixed value is not limited to 1. In other words, any constant number that is determined to be fixed may be used as the fixed value, however, "1" providing minimum processing is often used.

Thus, the conventional reception apparatus is also designed to perform time adjustment on a delayed wave beyond a range enabling compensation in an equalizer, thereby converge a received signal component spread on a time axis in the range enabling the compensation in the equalizer, and to improve reception performance.

However, since the conventional reception apparatus combines received signals while adjusting to a first wave of each group, there is a problem that a sufficient path diversity effect is not obtained.

That is, for example, when a replica generating section is provided with 5 delay elements so that the reception apparatus is capable of fetching up to 5T delayed wave maximum, it is possible to obtain path diversity effects corresponding to 6 paths maximum including the first wave. However, since the conventional reception apparatus combines received signals while simply adjusting to the first wave of each group to perform time adjustment, the apparatus does not always obtain the path diversity effects corresponding to 6 paths.

Disclosure of Invention

It is an object of the present invention to provide a reception apparatus and equalizing processing method capable of obtaining sufficient path diversity effects by performing path diversity always using the maximum number of paths allowed by a configuration of the apparatus without depending on a spread condition of received signal components.

To achieve the above object, in the present invention, in order for all delay elements in a replica generating section to be always employed in diversity combining, the received signal components are subjected to time adjustment corresponding to the spread condition of the received signal components on a time axis.

Brief Description of Drawings

FIG.1 is a partial block diagram illustrating a schematic configuration of a conventional reception apparatus;

FIG.2 is a partial block diagram illustrating a schematic configuration of a plural array combining section in the conventional reception apparatus;

FIG.3 is a partial block diagram illustrating a schematic configuration of a propagation path estimating section in the conventional reception apparatus;

FIG.4A is a diagram illustrating an example of a delay profile;

FIG.4B is a diagram illustrating the example of a delay profile;

FIG.4C is a diagram illustrating the example of a delay profile;

FIG.4D is a diagram illustrating the example of a delay profile;

FIG.5 is a partial block diagram illustrating a schematic configuration of a Viterbi equalizer in the conventional reception apparatus;

FIG.6 is a partial block diagram illustrating a schematic configuration of a replica generating section in the conventional reception apparatus;

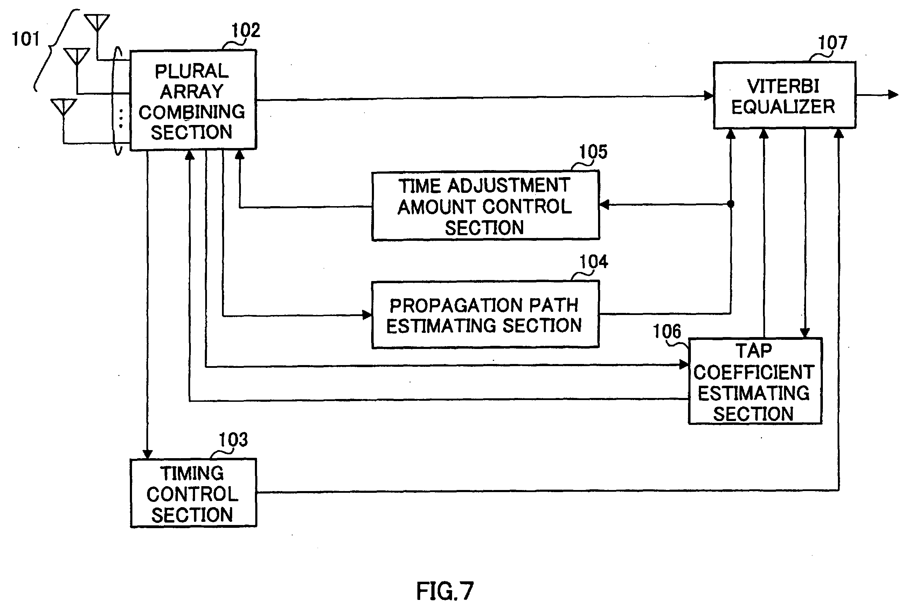

FIG.7 is a partial block diagram illustrating a schematic configuration of a reception apparatus according to one embodiment of the present invention;

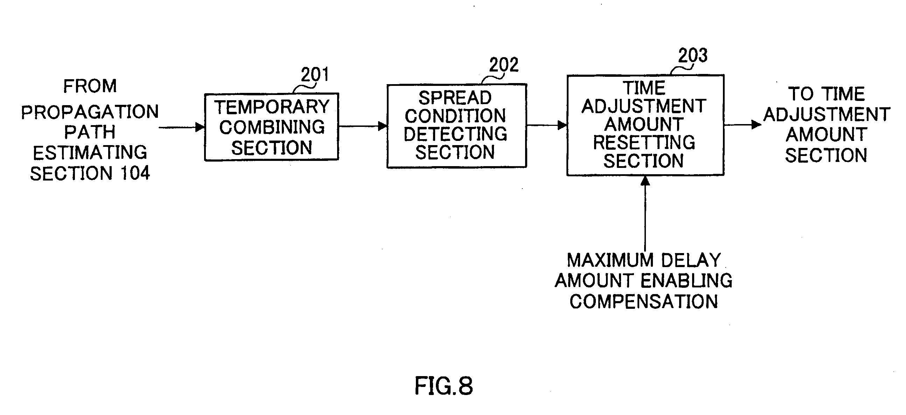

FIG.8 is a partial block diagram illustrating a schematic configuration of a time adjustment amount control section in the reception apparatus according to one embodiment of the present invention;

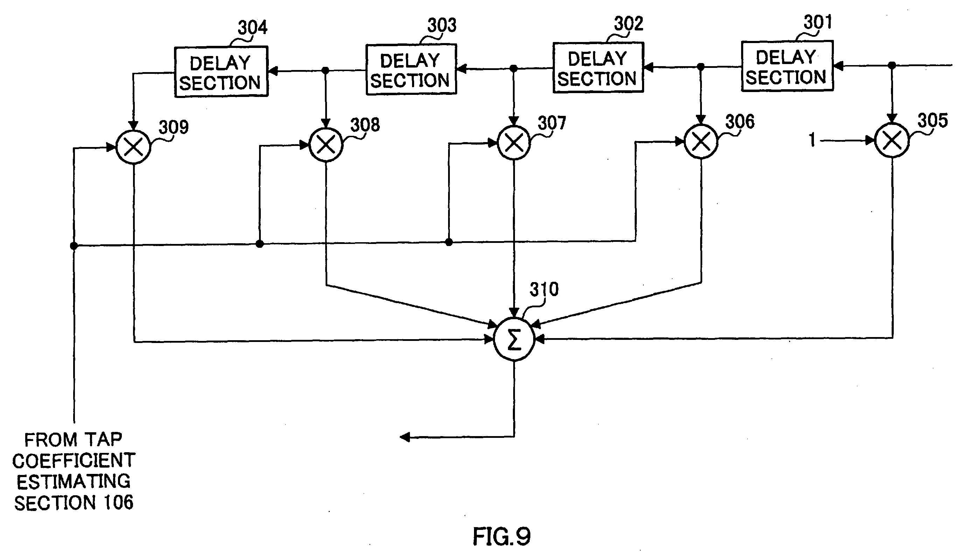

FIG.9 is a partial block diagram illustrating a schematic configuration of a replica generating section in the reception apparatus according to one embodiment of the present invention;

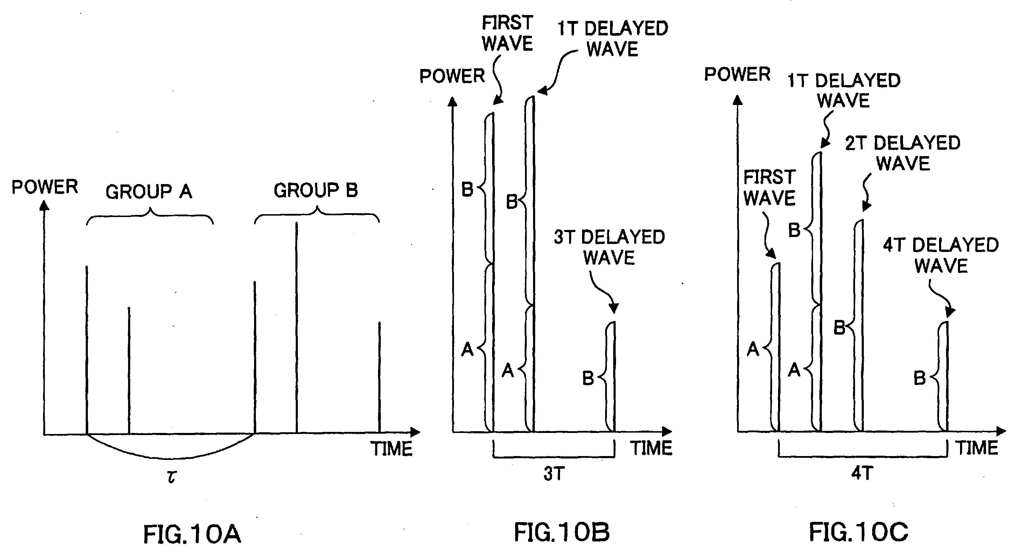

FIG.10A is a diagram illustrating an example of a delay profile of a received signal;

FIG.10B is a diagram illustrating an example of a delay profile of a received signal; and

FIG.10C is a diagram illustrating an example of a delay profile of a received signal.

Best Mode for Carrying Out the Invention

An embodiment of the present invention is explained in detail below with reference to accompanying drawings.

FIG.7 is a partial block diagram illustrating a schematic configuration of a reception apparatus according to one embodiment of the present invention. FIG.8 is a partial block diagram illustrating a schematic configuration of a time adjustment amount control section in the reception apparatus according to the embodiment of the present invention. FIG.9 is a partial block diagram illustrating a schematic configuration of a replica generating section in the reception apparatus according to the embodiment of the present invention. FIGs.10A to 10C are diagrams each illustrating an example of a delay profile of a received signal.

The entire configuration of the reception apparatus according to this embodiment is first explained using FIG.7. In FIG.7, plural array combining section 102 has processing systems, of which the number is the same as that of antennas, which combine signals received at respective antennas 101, and further combines resultants weighted and then combined for each antenna. A configuration and function of plural array combing section 102 are the same as those of the plural array combining section of the conventional reception apparatus, and therefore the detailed explanation of plural array combining section 102 is omitted.

Timing control section 103 acquires symbol synchronization timings from outputs of reception processing sections provided for each antenna in plural array combining section 102. In addition, timing control section 103 is capable of acquiring a symbol synchronization timing from an output from one of the reception processing sections.

Propagation path estimating section 104 estimates a delay profile from outputs of the reception processing sections provided for each antenna in plural array combining section 102 to perform propagation path estimation. A configuration and function of propagation path estimating section 104 are the same as those of the propagation path estimating section in the conventional reception apparatus, and therefore the detailed explanation of propagation path estimating section 104 is omitted. FIG.10A illustrates one example of an output of propagation path estimating section 104. In addition, propagation path estimating section 104 is capable of performing the propagation path estimation from an output from one of the reception processing sections.

Time adjustment amount control section 105 detects the number of combined signal components to be generated when the received signal components are converged based on a time adjustment amount calculated in propagation path estimating section 104. Then, time adjustment amount control section 105 compares the number of combined signal components to be generated with the number of delay elements of the replica generating section in Viterbi equalizer 107 described later, and when the numbers are different, resets a time adjustment amount to be instructed to a time adjustment section in plural array combining section 102 so that the numbers accord with each other, which is described later in detail.

Tap coefficient estimating section 106 estimates a coefficient that minimizes a mean square of a difference between a replica signal and a received signal (i.e., a weight based on the least square method), and outputs the estimated coefficient to FFF in plural array combining section 102 and the replica generating section in Viterbi equalizer 107. The coefficients are used in the FFF and multipliers 305 to 309 in the replica generating section.

Viterbi equalizer 107 generates the replica signal, and makes a decision using the Viterbi algorithm with the difference between the replica signal and a received signal component subjected to the time adjustment and then to array combining as likelihood information.

A configuration of time adjustment amount control section 105 is next explained using FIG.8. In FIG.8, temporary combining section 201 converges received signal components to combine based on the time adjustment amount (e.g., time between first waves of respective groups) calculated by propagation path estimating section 104.

Spread condition detecting section 202 detects a spread condition of received signal components. Further, spread condition detecting section 202 calculates a symbol delay up to which exists on combined signal components from the combined result in temporary section 201.

Time adjustment amount resetting section 203 determines whether or not the delay elements of the replica generating section in Viterbi equalizer 107 are all used when the received signal components are converged as instructed from propagation path estimating section 104, using the spread condition of the received signal components, a time spread (symbol lengths where the combined signal components exist) of the combined signal components to be generated when the received signal components are converged as instructed from propagation path estimating section 104, and the maximum delay amount enabling the compensation in Viterbi equalizer 107.

That is, time adjustment amount resetting section 203 determines whether or not the number of combined received signal components accords with the number of delay elements in the replica generating section. Then, when the numbers are out of accordance with each other, time adjustment amount resetting section 203 calculates a time adjustment amount such that the numbers are in accordance with each other, and outputs the calculated time adjustment amount to the time adjustment section in plural array combining section 102.

In other words, time adjustment amount resetting section 203 calculates the time adjustment amount such that a sampling timing of a greatest delay component among extracted received signal components accords with the maximum delay time enabling the compensation in Viterbi equalizer 107.

A configuration of the replica generating section in Viterbi equalizer 107 is next explained using FIG.9. In FIG.9, each of delay sections 301 to 304 delays an input signal so that the reception apparatus fetches the received signal component at each sampling timing. While any number of delay sections may be applicable, the number is assumed herein to be 4. When it is assumed that a delay amount of each delay section is one symbol duration, the reception apparatus is capable of fetching up to 4T delayed wave maximum.

Each of multipliers 305 to 309 multiplies a known signal component or symbol sequence candidate by the tap coefficient estimated in tap coefficient estimating section 106. In addition, in order for all the tap coefficients not to converge to 0, the tap coefficient to be multiplied by a first wave is set at a fixed value (herein, 1). Delayed waves each weighted by the respective tap coefficient are added in adder 301. The replica signal is thereby generated.

As illustrated in FIG.9, in the replica generating section of the reception apparatus according to this embodiment, all the delay sections 301 to 304 are always used. Accordingly, it is possible to obtain increased path diversity effects, and to improve the reception performance.

The operation of the reception apparatus with the above configuration is next explained.

A signal undergoing various distortions in a propagation path is received at antenna 101. Plural array combining section 102 performs reception processing on a received signal. Timing control section 103 detects a symbol synchronization timing using the reception-processing processed received signal.

Propagation path estimating section 104 performs propagation path estimation using the reception-processing processed received signal. Further, in order to converge spread received signal components in the range enabling the compensation in Viterbi equalizer 107, propagation path estimating section 104 estimates a time adjustment amount for a delayed wave.

The estimated time adjustment amount is corrected by time adjustment amount control section 105 so that the delay elements of the replica generating section in Viterbi equalizer 107 are all used.

FIG.10A illustrates a time adjustment amount $\tau$ estimated in propagation path estimating section 104. At this point, in order to combine group A and group B, a distance on the time axis between a beginning component of group A and a beginning component of group B is estimated as the time adjustment amount $\tau$.

Then, based on the time adjustment amount $\tau$, temporary combining section 201 in time adjustment amount control section 105 combines delayed waves of respective groups. FIG.10B illustrates combinations of respective delayed waves of groups A and B. Using the combined result, spread condition detecting section 202 detects a delay amount of the greatest delayed wave, and compares the detected maximum delay with the number of delay elements of the replica generating section. At this point, as illustrated in FIG.10B with the result of temporary combining, the maximum delay is 3T, the number of delay elements 301 to 304 in the replica generating section is 4, and therefore delay element 304 is not used when the time adjustment amount is maintained. Accordingly, the path diversity is not obtained sufficiently, and it is thereby judged that resetting is needed of the time adjustment amount to be instructed to the time adjustment section in plural array combining section 102.

When it is judged that the resetting of the time adjustment amount is needed, time adjustment amount resetting section 203 adds or subtracts unit delay time T to/from the time adjustment amount $\tau$, and thereby calculates a time adjustment amount $\tau'$ such that the maximum delay of the combined signal components accords with the number of delay elements in the replica generating section. In addition, the unit delay time T is determined corresponding to a delay amount in each delay section. Accordingly, when the delay amount in each delay section is one symbol duration, the addition or subtraction is performed based on one symbol duration, while when the delay amount in each delay section is 1/2 symbol duration, the addition or subtraction is performed based on 1/2 symbol duration.

In the case illustrated in FIG.10B, when $\tau'$ is made equal to $\tau$-T ($\tau'=\tau$-T), as illustrated in FIG.10C, it is possible to accord the maximum delay with the number of delay elements in the replica generating section. Therefore, the new time adjustment amount $\tau'=\tau$-T is output to the time adjustment section in plural array combining section 102.

The reception-processing processed received signal is subjected to time adjustment based on the corrected time adjustment amount that is an output of time adjustment amount control section 105, and further is subjected to array combining at each sampling timing.

A difference between the received signal and the replica signal calculated in Viterbi equalizer 107 is provided to tap coefficient estimating section 106. Then, tap coefficient estimating section 106 estimates a new tap coefficient so as to minimize the mean square of the difference between the received signal and the replica signal. The estimated tap coefficient is provided to Viterbi equalizer 107. The tap coefficient in the replica generating section in Viterbi equalizer 107 is thereby updated.

Thus, according to this embodiment, the time adjustment of received signal components is performed corresponding to the spread condition of the received signal component on the time axis so that delay sections that a replica generating section has are all used at the time of diversity combining, whereby it is possible to perform the path diversity always using the maximum number of paths allowed by an apparatus configuration.

In addition, while this embodiment explains the configuration using a plurality of adaptive array antennas, the present invention is not limited to this condition. That is, this embodiment may be applicable to a case of using a signal adaptive array antenna and another case of using an ordinary antenna instead of using the adaptive array antenna.

Further, in this embodiment, it may be possible to make a tap position variable to which a fixed value is input at the time a replica signal is generated, corresponding to a received level of a received signal component.

As described above, according to the present invention, it is possible to perform path diversity always using the maximum number of paths allowed by an apparatus configuration, whereby it is possible to improve the diversity effect, and to improve the error rate.

This application is based on the Japanese Patent Application No.HEI11-152301 filed on May 31, 1999, entire content of which is expressly incorporated by reference herein.

Industrial Applicability

The present invention is applicable to a base station apparatus used in a radio communication system, and further is applicable to a communication terminal apparatus performing a radio communication with the base station apparatus.

**Claims**

1.   A reception apparatus comprising:

a combiner that combines a predetermined number of signal components spread on a time axis after performing weighting on the components;
a converger that converges received signal components spread on the time axis in a range which enables signals in the range to be combined in the combiner; and
a controller that controls the converger so that a sampling timing of a signal component with a greatest delay amount among converged received signal components accords a maximum delay time in the range enabling signals in the range to be combined in the combiner.

2.   The reception apparatus according to claim 1, wherein the controller controls the converger so as to generate a same number of signal components as that of delay elements that the combiner has.

3.   The reception apparatus according to claim 1, further comprising:

a plurality of adaptive array antennas that receives signals incoming in predetermined respective directions; and
an array receiver that adds signals received at respective adaptive array antennas after performing weighting on the signals.

4.   A communication terminal apparatus mounted with a reception apparatus, said reception apparatus comprising:

a combiner that combines a predetermined number of signal components spread on a time axis after performing weighting on the components;
a converger that converges received signal components spread on the time axis in a range which enables signals in the range to be combined in the combiner; and
a controller that controls the converger so that a sampling timing of a signal component with a greatest delay amount among converged received signal components accords a maximum delay time in the range enabling signals in the range to be combined in the combiner.

5.   A base station apparatus that performs a radio communication with the communication terminal apparatus according to claim 4.

6.   A base station apparatus mounted with a reception apparatus, said reception apparatus comprising:

a combiner that combines a predetermined number of signal components spread on a time axis after performing weighting on the components;
a converger that converges received signal components spread on the time axis in a range which enables signals in the range to be combined in the combiner; and
a controller that controls the converger so that a sampling timing of a signal component with a greatest delay amount among converged received signal components accords a maximum delay time in the range enabling signals in the range to be combined in the combiner.

7.   A communication terminal apparatus that performs a radio communication with the base station apparatus according to claim 6.

8.   An equalizing processing method comprising:

a combining step of combining a predetermined number of signal components spread on a time axis after performing weighting on the components;
a converging step of converging received signal components spread on the time axis in a range which enables signals in the range to be combined at the combining step; and
a controlling step of controlling the converging step so that a sampling timing of a signal component with a greatest delay amount among converged received signal components accords a maximum delay time in the range enabling signals in the range to be combined at the combining step.

FIG.1

EP 1 102 420 A1

FIG.2

FIG.3

POWER

TIME

T

FIG.4A

POWER

THRESHOLD

TIME

FIG.4B

POWER

TIME

3T    3T

FIG.4C

POWER    GROUP A    GROUP B

TIME

τ

FIG.4D

EP 1 102 420 A1

FROM PLURAL
ARRAY
COMBINING
SECTION 12

51

ERROR
POWER
CALCULATING
SECTION

52

VITERBI
CALCULATION
SECTION

53

REPLICA
GENERATING
SECTION

56

55

MEMORY

54

FROM
PROPAGATION
PATH ESTIMATING
SECTION 14

FROM/TO TAP
COEFFICIENT
ESTIMATING
SECTION·15

FROM
TIMING
CONTROL
SECTION 13

FIG.5

EP 1 102 420 A1

FIG.6

EP 1 102 420 A1

FIG.7

EP 1 102 420 A1

FROM
PROPAGATION
PATH
ESTIMATING
SECTION 104

$\xrightarrow{\phantom{xx}}$

201

TEMPORARY
COMBINING
SECTION

$\xrightarrow{\phantom{xx}}$

202

SPREAD
CONDITION
DETECTING
SECTION

$\xrightarrow{\phantom{xx}}$

203

TIME
ADJUSTMENT
AMOUNT
RESETTING
SECTION

$\xrightarrow{\phantom{xx}}$

TO TIME
ADJUSTMENT
AMOUNT
SECTION

MAXIMUM DELAY
AMOUNT ENABLING
COMPENSATION

FIG.8

EP 1 102 420 A1

FIG.9

DELAY SECTION 301

DELAY SECTION 302

DELAY SECTION 303

DELAY SECTION 304

305
306
307
308
309

310

Σ

1

FROM TAP COEFFICIENT ESTIMATING SECTION 106

FIG.10A

FIG.10B

FIG.10C

# INTERNATIONAL SEARCH REPORT

International application No.

PCT/JP00/03446

| A. CLASSIFICATION OF SUBJECT MATTER |
|---|
| Int.Cl⁷  H04B7/10, 7/08, 7/02, 7/005<br>H01Q3/26 |

According to International Patent Classification (IPC) or to both national classification and IPC

| B. FIELDS SEARCHED |
|---|
| Minimum documentation searched (classification system followed by classification symbols)<br>Int.Cl⁷  H01Q3/00-3/46, 21/00-25/04, H03H15/00-21/00<br>H04B1/76-3/44, 3/50-3/60, 7/00-7/12<br>H04L1/02-1/06 |

Documentation searched other than minimum documentation to the extent that such documents are included in the fields searched

| Jitsuyo Shinan Koho | 1922-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| E,A | JP, 2000-188567, A (NTT Ido Tsushinmo K.K.),<br>04 July, 2000 (04.07.00)  (Family: none) | 1-8 |
| A | JP, 9-116388, A (Sony Corporation),<br>02 May, 1997 (02.05.97)  (Family: none) | 1-8 |
| A | JP, 10-336083, A (NTT Ido Tsushinmo K.K.),<br>18 December, 1998 (18.12.98)  (Family: none) | 1-8 |
| A | JP, 5-14130, A (Kawasaki Steel Corporation),<br>22 January, 1993 (22.01.93)<br>& CA, 2051858, C | 1-8 |
| A | JP, 6-350328, A (CLARION CO., LTD.),<br>22 December, 1994 (22.12.94)  (Family: none) | 1-8 |
| A | JP, 6-120774, A (Matsushita Electric Ind. Co., Ltd.),<br>28 April, 1994 (28.04.94)  (Family: none) | 1-8 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>02 August, 2000 (02.08.00) | Date of mailing of the international search report<br>22 August, 2000 (22.08.00) |
|---|---|
| Name and mailing address of the ISA/<br>Japanese Patent Office | Authorized officer |
| Facsimile No. | Telephone No. |

Form PCT/ISA/210 (second sheet) (July 1992)